# EUROPÄISCHE PATENTSCHRIFT

(11) **EP 0 608 547 B1**
(45) Veröffentlichungstag und Bekanntmachung des Hinweises auf die Patenterteilung: **12.03.1997**
(21) Anmeldenummer: 93120577.7
(22) Anmeldetag: 21.12.1993
(51) Int. Cl.: B01J 20/34, B01D 53/34

(54) **Verfahren zum Regenerieren von Quecksilberadsorptionsmitteln**
Process for regenerating mercury adsorbants
Procédé pour regénérer des adsorbants pour enlever du mercure

(30) Priorität: 27.01.1993 DE 4302166
(43) Veröffentlichungstag der Anmeldung: 03.08.1994
(73) Patentinhaber: DEGUSSA AG, 60311 Frankfurt (DE)
(72) Erfinder: Hasenpusch, Wolfgang, D-63457 Hanau 9 (DE); Wetterich, Harald, D-63768 Hösbach (DE)

(56) Entgegenhaltungen:
- EP-A- 0 487 834
- DE-A- 3 729 030
- GB-A- 1 376 544
- US-A- 5 110 480

## Beschreibung

Die Erfindung betrifft ein Verfahren zur Regenerierung von mit Silbernitrat getränkten keramischen Teilchen für die Entfernung von Quecksilber aus Abgasen.

Für die Abtrennung von gasförmigem Quecksilber aus Abgasen wurden in der Vergangenheit eine Reihe von Verfahren entwickelt, wobei zumeist imprägnierte keramische Teilchen zum Einsatz kommen, die das Quecksilber adsorbieren und die Quecksilberkonzentration im Abgas auf wenige µg/m³ absenken können. Sie haben jedoch den Nachteil, daß diese Teilchen nach der Beladung mit Quecksilber meist auf Sondermülldeponien gelagert werden müssen. Neben der Inanspruchnahme von ohnehin knappem Deponieraum besteht hier auch die Gefahr, daß das Quecksilber ins Grundwasser gelangt.

Aus der AT-PS 393 632 ist ein Verfahren zur Abtrennung von Quecksilber aus Abgasen beim Verbrennen schwermetallhaltiger Abfälle bekannt, bei dem mit Silbersalzen imprägnierte Zeolithteilchen verwendet werden. Dabei lassen sich Grenzwerte von weniger als 50 µg Quecksilber pro Kubikmeter Abgas erreichen. Die Imprägnierung mit Silbersalzen erfolgt auf einfache Weise durch Überbrausen mit Abwässern der Photoindustrie.

Die mit Schwermetallen und Quecksilber beladenen Zeolithteilchen werden anschließend zur Ziegel- und Klinkerherstellung verwendet. Eine Wiedergewinnung des Quecksilbers und des Silbers ist nicht vorgesehen, die Verarbeitung zu Ziegein und Klinkern ist aus Umweltgründen sehr problematisch.

Es war daher Aufgabe der vorliegenden Erfindung, ein Verfahren zur Regenerierung von mit Silbernitrat getränkten keramischen Teilchen für die Entfernung von Quecksilber aus Abgasen zu entwickeln, bei dem das Quecksilber wiedergewonnen und die keramischen Teilchen zur Quecksilberadsorption wiederverwendet werden können.

Diese Aufgabe wird erfindungsgemäß dadurch gelöst, daß die mit Quecksilber beladenen keramischen Teilchen zur Abtreibung des Quecksilbers auf 600 bis 900° C erhitzt und anschließend die keramischen Teilchen mit Salpetersäure getränkt und getrocknet werden.

Vorzugsweise setzt man der Salpetersäure vor der Tränkung Wasserstaffperoxid zu. Dadurch wird die Bildung von nitrosen Gasen verhindert.

Bei den keramischen Teilchen handelt es sich insbesondere um Silicagele, Kieselsäuren oder Zeolithe. Sie werden mit 2 bis 20 Gew. % Silbernitrat versehen, indem man die Teilchen mit einer konzentrierten wässrigen Silbernitratlösung tränkt und anschließend trocknet. Bewährt haben sich vor allem Silbernitratgehalte van 10 bis 15 Gew.%. Diese Teilchen sind hervorragend geeignet, Quecksilberdämpfe aus Abgasen zu adsorbieren.

Bei voller Quecksilberbeladung werden die keramischen Teilchen regeneriert, indem man sie zur Abdestillation des Quecksilbers auf Temperaturen von 600 bis 900° C, insbesondere auf 850 bis 900° C erhitzt. Diese Temperaturen liegen weit über der Siedetemperatur des Quecksilbers (356° C). Nach der vollständigen Abdestillation des Quecksilbers werden die keramischen Teilchen abgekühlt und mit Salpetersäure versetzt, wobei sich das in der Hitze gebildete Silber in Silbernitrat zurückverwandelt. Nach dem Trocknen können die regenerierten keramischen Teilchen erneut zur Quecksilberadsorption aus Abgasen eingesetzt werden.

Anwendungsmöglichkeiten der vorliegenden Erfindung sind sowohl im industriellen Bereich, bei der Entgiftung von Prozeß- und Verbrennungsabgasen zu finden, als auch bei der Verbrennung quecksilberhaltiger Abfälle und Klärschlämme in kommunalen Klär- bzw. Müllverbrennungsanlagen.

Aber auch bei der Objektabsaugung an Arbeitsplätzen, wie beispielsweise in chemischen Laboratorien, Dentallabors und Zahnarztpraxen könnten leicht auswechselbare Filterkartuschen in den Abluftstrom integriert werden.

Bei der Sanierung quecksilberverseuchter Böden ist es möglich, das Quecksilber mit Druckluft dem Boden zu entziehen, die Druckluft mit Filteranlagen zu reinigen und das Filtermaterial aufzuarbeiten, ohne ein neues Problem mit Hg-belasteten Abfallstoffen zu schaffen.

Folgendes Beispiel soll das erfindungsgemäße Verfahren näher erläutern:
50 g eines mit 15 Gew. % Silbernitrat (7,5 g AgNO₃/50 g Adsorbens) beschichteten Silicagels werden zwischen zwei Wattestopfen derart in eine Gaswaschflasche gefüllt, daß ein quecksilberhaltiger Luftstrom das gesamt Adsorbens durchströmen kann.

Eine mit Quecksilber gefüllte Waschflasche wird im Wasserbad auf 80° C erwärmt und bei konstanter Temperatur ein Luftstrom von 90 l/h durch das Adsorptionsmittel zum Meßgerät geleitet. Der Luftstrom enthält nach Verlassen der quecksilbergefüllten Waschflasche 830 mgHg/cm³ Luft. Hinter der Gaswaschflasche mit dem Adsorptionsmittel werden im Luftstrom zeitabhängig folgende Quecksilberkonzentrationen ermittelt:

| Meßwerte: | | | |
|---|---|---|---|
| Stunden | µg Hg/m³ | Stunden | µg Hg/m³ |
| | | 47 | 12 |
| 2 | 5 | 48 | 30 |
| 5 | 6 | 49 | 48 |
| 20 | 6 | 50 | 70 |
| 44 | 7 | 51 | 192 |
| 46 | 9 | 52 | 432 |

Die Quecksilber-Messung erfolgt mit einem Atomabsorptions-Zweistrahlphotometer.

Das Adsorptionsmittel ändert während des Adsorptionsvorganges seine Farbe von weiß nach grau/schwarz und nimmt 6,7 g (ca. 13 Gew. %) Quecksilber auf.

Im Anschluß daran wird das beladene Silicagel auf ca. 850° C aufgeheizt und das Quecksilber abdestilliert. Zurück bleibt ein braun/schwarzer, mit Silber beschichteter Silicagelträger, der nach dem Abkühlen mit einem leichten Überschuß (bezogen auf Silber) Salpetersäure versetzt wird. Dabei wird das Silber wieder in Silbernitrat übergeführt, wobei sich die Bildung von nitrosen Gasen durch vorsichtige Zugabe von wenig Wasserstoffperoxid unterdrücken läßt. Nach Trocknung bei 120-130° C wird das Adsorbens wieder in eine Gaswaschflasche gefüllt und oben beschriebener Versuchsgang wiederholt.

| Meßergebnisse: | | | |
|---|---|---|---|
| Stunden | µg Hg/m³ | Stunden | µg Hg/m³ |
| | | 40 | 345 |
| 2 | 320 | 41 | 347 |
| 5 | 353 | 42 | 530 |
| 20 | 342 | 43 | 900 |
| 39 | 348 | | |

Das Ergebnis zeigt, daß das Adsorptionsmittel zwar an Adsorptionsfähigkeit verloren hat, aber in seiner Standzeit dem Ausgangsprodukt vergleichbar ist.

## Patentansprüche

1. Verfahren zur Regenerierung von mit Silbernitrat getränkten keramischen Teilchen für die Entfernung von Quecksilber aus Abgasen,
**dadurch gekennzeichnet**,
daß die mit Quecksilber beladenen keramischen Teilchen zur Abtreibung des Quecksilbers auf 600 bis 900° C erhitzt und anschließend die keramischen Teilchen mit Salpetersäure getränkt und getrocknet werden.

2. Verfahren nach Anspruch 1,
**dadurch gekennzeichnet**,
daß die Abtreibung des Quecksilbers bei 850 bis 900° C erfolgt.

3. Verfahren nach Anspruch 1 oder 2,
**dadurch gekennzeichnet**,
daß man der Salpetersäure Wasserstoffperoxid zusetzt.

## Claims

1. Process for the regeneration of ceramic particles impregnated with silver nitrate for the removal of mercury from waste gases, *characterised in that* the ceramic particles loaded with mercury are heated to 600 to 900°C to strip off the mercury and the ceramic particles are then impregnated with nitric acid and dried.

2. Process according to claim 1,
*characterised in that* the stripping off of the mercury takes place at 850 to 900°C.

3. Process according to claim 1 or 2,
*characterised in that* hydrogen peroxide is added to the nitric acid.

## Revendications

1. Procédé pour la régénération de particules céramiques imprégnées avec du nitrate d'argent, pour l'élimination du mercure hors de gaz d'échappement,
caractérisé en ce que,
les particules céramiques chargées avec du mercure sont chauffées à une température de 600 à 900°C pour entrainer le mercure et ensuite, les particules céramiques sont imprégnées avec de l'acide nitrique et séchées.

2. Procédé selon la revendication 1, caractérisé en ce que l'entraînement du mercure a lieu à une température de 850 à 900°C.

3. Procédé selon la revendication 1 ou 2, caractérisé en ce qu'on ajoute du peroxyde d'hydrogène à l'acide nitrique.
